# EUROPEAN PATENT SPECIFICATION

(11) **EP 3 498 469 B1**
(45) Date of publication and mention of the grant of the patent: **01.12.2021**
(21) Application number: 17207283.7
(22) Date of filing: 14.12.2017
(51) Int. Cl.: B32B 27/12, B32B 27/36

(54) **LAMINATE CONTAINING POLYCARBONATE COMPOSITION LAYERS AND FIBER STRUCTURE LAYERS WITH IMPROVED FIRE RESISTANCE PROPERTIES**
LAMINAT MIT POLYCARBONATZUSAMMENSETZUNGSSCHICHTEN UND FASERSTRUKTURSCHICHTEN MIT VERBESSERTEN FEUERBESTÄNDIGKEITSEIGENSCHAFTEN
COUCHES DE COMPOSITION DE POLYCARBONATE CONTENANT UN STRATIFIÉ ET COUCHES DE STRUCTURE DE FIBRES PRÉSENTANT DES PROPRIÉTÉS AMÉLIORÉES DE RÉSISTANCE AU FEU

(43) Date of publication of application: 19.06.2019
(73) Proprietor: Trinseo Europe GmbH, 8810 Horgen (CH)
(72) Inventor: Lakeman, Pascal, 4816 AW Breda (NL); Van Nuffel, Claude T. E., 9041 Oostakker (BE); Chung, Yao-Chu, 30352 Hsinchu county (TW); Balan, Abidin, 4814 VL Breda (NL)
(74) Representative: Hoffmann Eitle

(56) References cited:
- WO-A1-2016/186100
- JP-A- 2014 166 731
- US-A1- 2013 317 149
- US-A1- 2014 371 360
- US-A1- 2015 197 633

## Description

### FIELD

The disclosure relates to laminate structures containing layers of polycarbonate compositions and fiber containing structures having good fire resistant properties. The polycarbonate compositions may contain recycled polycarbonate content.

### BACKGROUND

Polycarbonate and copolymers containing carbonate units are utilized as the matrix layers in laminates containing fiber containing structures. Polycarbonates and copolymers containing carbonate units form layers that are rigid. Laminates based on polycarbonates and fiber structures can be formed into a variety of structures by thermoforming, net shape drawing, deep drawing and the like. These laminate structures may be used for a variety of uses, including automobile parts, electronics , medical devices and the like. Fire retardancy of such laminate structures is an important safety consideration. The market continues to demand improved fire retardancy while maintaining the premium properties of laminates containing polycarbonate or copolymers thereof and fiber layers. In addition there is a demand to recycle used polycarbonate or copolymers thereof. The use of recycled polycarbonate or copolymers thereof in laminate structures is desired provided the structures provide fire retardancy and maintain the aforesaid premium properties. Recycled polycarbonates and copolymers thereof may be sourced from post-consumer waste such as water bottles, soda bottles and the like. Such recycled polycarbonates may contain polyester impurities, for instance in amounts of 0.1 to 1.0 percent by weight. The presence of polyesters may negatively impact fire retardancy of structures containing recycled polycarbonates. The presence of fire retardants can cause other important properties to fall below desired targets, for instance, haze, transparency, flex modulus and bending strength. WO2016/186100A1 discloses polycarbonate resin compositions having flame retardancy. US2014/371360A1 discloses a flame retardant composition comprising a polycarbonate; a polysiloxane-polycarbonate copolymer; a reinforcing filler; and a flame retarding compound. US2015/197633A1 discloses a railway component, wherein the component is a molded or extruded interior train component comprising a polycarbonate composition. US2013/317149A1 discloses a flame retardant composition comprising a polycarbonate; a polylactide; and a flame retardant. And JP2014-166731A provides a polycarbonate resin composition having flame retardancy and ability to impregnate continuous fiber reinforcement materials.

What is needed are compositions containing polycarbonates or copolymers of polycarbonates which form laminate structures having improved fire retardancy while maintaining the premium properties of laminates containing polycarbonate or copolymers thereof and fiber layers. What are needed are compositions including recycled polycarbonate or copolymers thereof that may contain polyesters and laminates prepared therefrom which exhibit improved fire retardancy without sacrificing other properties, such as flexural modulus, bending strength, haze, transparency and the like. What are also needed are laminates prepared from such compositions that exhibit improved fire retardancy and such premium properties.

### SUMMARY

The invention is defined in the claims. Disclosed are laminate composition comprising one or more layers of a fiber structure and two or more layers of a polymeric composition wherein each layer of the fiber structure is disposed between two layers of the polymeric composition wherein the polymeric composition comprises one or more branched polycarbonates or copolymers containing carbonate units and one or more crosslinked phosphazenes; wherein the laminate composition exhibits a UL 94 rating of V-0 with a Σ (T1 +T2) of 50 or less, for a 0.75 mm thick specimen. The polymeric film composition may contain one or more linear polycarbonates or linear copolymers containing carbonate units. The polymeric film composition may contain one or more recycled branched polycarbonates or copolymers containing carbonate units or one or more recycled linear polycarbonates or copolymers containing carbonate units. The polymeric composition contains: a) from about 50 to about 90 percent by weight of one or more branched polycarbonates or copolymers containing carbonate units; b) from about 0 to about 40 percent by weight of one or more linear polycarbonates or copolymers containing carbonate units; and c) from about 8 to about 24 percent by weight of one or more crosslinked phosphazenes; wherein all weights are based on the polymeric composition and wherein the polymeric composition is further defined in claim 1. The polymeric composition contains one or more salts of a perflouroalkane sulfur compounds, such as perflouroalkane sulfonates, or an aromatic sulfur compounds, such as an aromatic sulfonate. The one or more salts of a perflouroalkane sulfur compounds or an aromatic sulfur compounds may be present in an amount of about 0.05 to about 1 percent by weight based on the polymeric composition. The polymeric composition may contain one or more salts of perflouroalkane sulfonates or aromatic sulfonates. The polymeric composition may form a layer on application. A film of the polymeric composition may be used to form the laminate.

The one or more crosslinked phosphazenes may be one or more cyclic phosphazenes. The one or more crosslinked phosphazenes may be one or more linear phosphazenes. The one or more phosphazenes may contain phenoxy groups. The phenoxy groups may be bonded to the phosphorous atoms. The one or more crosslinked phospahzenes may be crosslinked by the residue of a bisphenol compound. The one or more crosslinked phosphazenes may be crosslinked by the residue of a bisphenol sulfonate compound. The one or more crosslinked phosphazenes may be crosslinked by the residue of bisphenol S (4,4'-Sulfonyldiphenol).

The laminate layer may contain any fiber containing layer. The fiber containing layer may be a woven structure, a non-woven structure, and the like. The fibers can be any fibers which provide structure and strength. Such fibers may be polymeric, glass, metal, ceramic, carbon, or mixtures thereof. The fiber structures may be woven glass and/or carbon fiber structures.

The polymeric composition may comprise one of more of one or more non-halogenated flame retardants, one or more antioxidants, one or more UV Absorbers, one or more lubricants and the like. The one or more non-halogenated flame retardants comprise one or more of bisphosphate esters, polyphosphonates, and polyphosphazenes (non crosslinked).

The laminate structures may contain from about 40 to about 60 percent by weight of the polymeric composition and from about 40 to about 60 percent by weight of the fiber structure based on the weight of the laminate composition. The laminate structures may contain one or more fiber structures. The laminate structures may have each layer of fiber structures disposed between two layers of polymeric compositions. The polymeric compositions may be bonded to the surfaces of the fiber structures that such polymeric composition layers are adjacent to. The layers of polymeric compositions may be bonded to the surfaces of the fiber structures by melt bonding, adhesive bonding and the like. The layers of the polymeric compositions may be bonded to the surfaces of the fiber layers by melt bonding. The layers of the polymeric compositions may be films.

The laminate compositions exhibit excellent fire retardancy as exhibited by a UL 94 rating of V-0. The laminate compositions exhibits Σ (T1+T2) of 50 or less under such test for a 0.75 mm thick specimen, 40 or less, 30 or less or 25 or less. In addition the laminate exhibits excellent flexural modulus, bending strength, haze, transparency properties. The flexural modulus may be about 40 GPa or greater, may be 42GPa or greater, and may be 60 GPa or less for a 0.75 mm sheet containing 45 percent by weight of a carbon fiber layer. The bending strength for a 0.75 mm sheet containing 45 percent by weight of a carbon fiber layer may be 750 MPa or greater or 780 or greater, and may be 1000 MPa or less. The flexural modulus may be about 15 GPa or greater or may be 20 GPa or greater, and may be 40 GPa or less for a 0.75 mm sheet containing 45 percent by weight of a glass fiber layer. The bending strength for a 0.75 mm sheet containing 45 percent by weight of a glass fiber layer may be 580 MPa or greater or 590 or greater, and may be 1000 MPa or less. The haze of the polymeric composition may be about 3 percent or less or about 2.5 percent or less, and may be about 0.1 percent or greater. The transparency of the polymeric composition maybe about 70 percent or greater or about 80 percent or greater, and may be about 99 percent or less. The polymeric compositions exhibit excellent transparency, haze properties, and the like.

### DETAILED DESCRIPTION

The explanations and illustrations presented herein are intended to acquaint others skilled in the art with the disclosure, its principles, and its practical application. Accordingly, the specific embodiments of the present disclosure as set forth are not intended as being exhaustive or limiting of the claims. The scope of the claims should, therefore, be determined with reference to the appended claims, along with the full scope of equivalents to which such claims are entitled. Other combinations are also possible as will be gleaned from the following claims.

Disclosed are laminate compositions containing one or more or two or more layers of one or more polycarbonates and/or copolymers containing carbonate units and one or more fiber containing structures. The layers comprising one or more polycarbonates and/or copolymers containing carbonate units comprise one or more crosslinked phosphazenes. The layers containing one or more polycarbonates or copolymers containing carbonate units and one or more crosslinked phosphazenes may comprise one or more salts of perflouroalkane sulfur compounds or aromatic sulfur compounds. The laminate structures containing layers comprising compositions containing one or more polycarbonates and/or copolymers containing carbonate units exhibit excellent fire retardant properties, and excellent properties such as flex modulus, bending strength, haze and transparency. The polycarbonates or copolymers containing carbonate units may comprise branched structures. The polycarbonates or copolymers containing carbonate units may comprise linear structures. The polycarbonates or copolymers containing carbonate units may comprise branched and linear structures. The polycarbonates or copolymers containing carbonate units may comprise recycled polycarbonates or copolymers containing carbonate units or mixtures of recycled materials and virgin materials.

One or more as used herein means that at least one, or more than one, of the recited components may be used as disclosed. As used herein percent by weight or parts by weight refer to, or are based on, the weight of the disclosed compositions or laminates unless otherwise specified. Unless otherwise stated such parts by weight are based on 100 parts.

Polycarbonate as used herein means a polymer containing carbonate units. Such polymers may be homopolymers consisting essentially of carbonate monomer units or copolymers containing one or more other monomer units (co-monomer units) and carbonate units. Such copolymers may be block copolymers containing two or more blocks of different monomer units or may be random copolymers with the different monomer units randomly located along the polymer backbone. The other monomer units may comprise any monomer units that do not negatively impact the inherent properties of polycarbonates, for instance heat resistance, impact resistance, moldability, flexural modulus, bending strength, haze and transparency, where required for the intended use. Among exemplary comonomer units are ester units, polysiloxane units, and the like. The amount of carbonate monomer units in copolycarbonates is selected such that the resulting polymer retains the desirable properties of polycarbonates, for instance heat resistance, impact resistance, moldability, flexural modulus, bending strength, haze and transparency, where required for the intended use. The copolycarbonates may contain greater than 50 mole percent carbonate monomer units, about 75 mole percent or greater carbonate monomer units, about 80 mole percent or greater carbonate monomer units or about 85 mole percent or greater carbonate monomer units. The copolycarbonates may contain about 99 mole percent or less carbonate monomer units, about 97 mole percent or less carbonate monomer units or about 95 mole percent or less carbonate monomer units. The copolycarbonates may contain about 1 mole percent or greater co-monomer monomer units, about 3 mole percent or greater comonomer monomer units or about 5 mole percent or greater co-monomer monomer units. The copolycarbonates may contain less than 50 mole percent co-monomer monomer units, about 25 mole percent or less co-monomer monomer units, about 20 mole percent or less co-monomer monomer units or about 15 mole percent or less comonomer monomer units. The polycarbonate units may contain aromatic units in the backbone of the polymer.

The production of polycarbonates is effected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols. Diphenols for the production of the aromatic polycarbonates and/or aromatic polyester carbonates may correspond to formula I 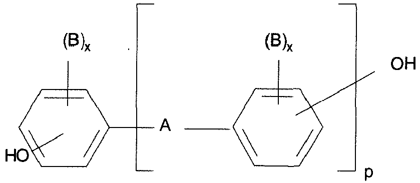 wherein A denotes a single bond, a C₁ - C₅ alkylene, a C₂ - C₅ alkylidene, a C₅ - C₆ cycloalkylidene, -O-, -SO-, -CO-, -S-, -SO2-, or a C₆ - C₁₂ arylene, on to which other aromatic rings, which optionally contain hetero atoms, can be condensed, or a radical of formula II or III: 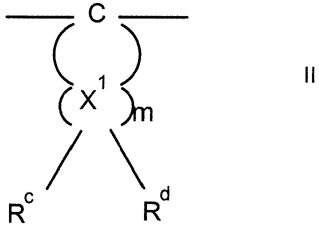 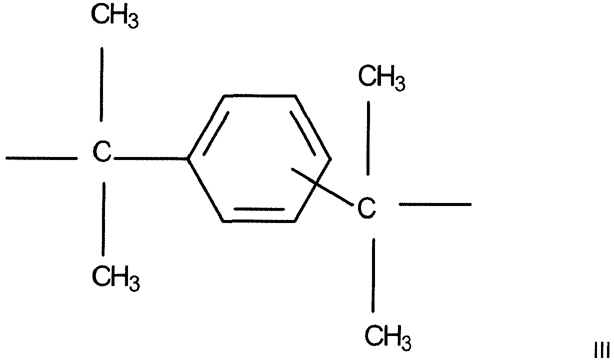
wherein B in each case is independently hydrogen, a C₁ - C₁₂ alkyl, preferably methyl, or a halogen, preferably chlorine and/or bromine;
x in each case is mutually independently 0, 1, or 2;
p is 0 or 1;
R^{c} and R^{d} are mutually independent of each other and are individually selectable for each X¹ and are hydrogen or a C₁ - C₆ alkyl, preferably hydrogen, methyl or ethyl; X¹ denotes carbon; and
m denotes an integer from 4 to 7, preferably 4 or 5, with the proviso that R^{c} and R^{d} simultaneously denote an alkyl on at least one X¹ atom.

Exemplary diphenols are hydroquinone, resorcinol, dihydroxybiphenyls, bis(hydroxyphenyl)-C₁-C₅ alkanes, bis(hydroxyphenyl)-C₅-C₆ cycloalkanes, bis(hydroxylphenyl)ethers, bis(hydroxyphenyl)sulfoxides, bis(hydroxyphenyl)ketones, bis(hydroxylphenyl)sulfones and 4,4"-bis(hydroxyphenyl)diisopropylbenzenes, as well as derivatives thereof which have brominated and/or chlorinated nuclei. Diphenols which are particularly preferred are 4,4'-dihydroxybiphenyl, bisphenol A, 2,4-bis(4-hydroxyphenyl)-2-methyl-butane, 1,1-bis(4-hydroxyphenyl)-cyclohexane, 1,1-bis(4-hydroxyphenyl)-3,3,5-trimethyl-cyclohexane, 4,4-dihydroxydiphenyl sulfide and 4,4-dihydroxydiphenyl sulfone, as well as di- and tetrabrominated or chlorinated derivatives thereof, such as 2,2-bis(3-chloro-4-hydroxyphenyl)propane, 2,2-bis-(3,5-dichloro-4-hydroxyphenyl)propane or 2,2-bis(3,5-dibromo-4-hydroxyphenyl)propane. 2, 2-bis-(4-hydroxyphenyl)propane (bisphenol A) is particularly preferred. The diphenols can be used individually or as arbitrary mixtures. The diphenols are known from the literature or can be obtained by methods known from the literature. Apart from bisphenol A homopolycarbonates, the preferred polycarbonates are the copolycarbonates of bisphenol A with up to 15 mole percent, with respect to the molar sums of the diphenols, of other diphenols which are cited as preferred or particularly preferred, in particular 2,2-bis(3,5-dibromo-4-hyd roxyphenyl)-propane.

Exemplary chain terminators for the production of the polycarbonates include phenolic compounds, exemplary phenolic compounds include phenol, p-chlorophenol, p-tert-butylphenol, 4-(1,3-dimethyl-butyl)-phenol and 2,4,6-tribromophenol; long chain alkylphenols, such as monoalkylphenols or dialkylphenols which contain a total of 8 to 20 C atoms in their alkyl substituents, exemplary are 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol. The amount of chain terminators used may be about 0.1 mole percent or greater based on the molar sum of the diphenols used in each case. The amount of chain terminators used may be about 10 mole percent or less based on the molar sum of the diphenols used in each case.

The polycarbonates can be branched in the known manner, for example by the incorporation of about 0.05 to about 2.0 mole percent, with respect to the sum of the diphenols used, of trifunctional compounds or of compounds with a functionality higher than three, for example those which contain three or more phenolic groups. Branched polycarbonates useful for the compositions disclosed can be prepared by known techniques, for example several methods are disclosed in USP 3,028,365; 4,529,791; and 4,677,162. Exemplary branching agents that may be used are tri- or multi-functional carboxylic acid chlorides, such as trimesic acid trichloride, cyanuric acid trichloride, 3,3'-,4,4'-benzophenonetetracarboxylic acid tetrachloride, 1,4,5,8-naphthalene-tetracarboxylic acid tetrachloride or pyromellitic acid tetrachloride for example, in amounts of about 0.01 to about 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris(4-hydroxyphenyl)heptane, 1,3,5-tris(4-hydroxyphenyl)-benzene, 1,1,1-tris(4-hydroxyphenyl)ethane, tris(4-hydroxyphenyl)-phenyl-methane, 2,2-bis[4,4-bis(4-hydroxyphenyl)cyclohexyl]-propane, 2,4-bis[1 -(4-hydroxyphenyl)-1-methyl-ethyl]phenol, tetrakis(4-hydroxyphenyl)-methane, 2,6-bis(2-hydroxy-5-methyl-benzyl)-4-methyl-phenol, 2-(4-hydroxyphenyl)-2-(2,4-dihydroxyphenyl)propane, or tetrakis(4-[1-(4-hydroxyphenyl)-1-methylethyl]-phenoxy)-methane in amounts of about 0.01 to about 1.0 mole percent with respect to the diphenols used. Phenolic branching agents can be placed in the reaction vessel with the diphenols. Acid chloride branching agents can be introduced together with the acid chlorides.

Copolycarbonates, copolymers containing carbonate units and other monomer units, may be prepared by known processes in the art. In one exemplary embodiment, about 1 to about 25 parts by weight, about 2.5 to about 25 parts by weight (with respect to the total amount of diphenols to be used) of polydiorganosiloxanes comprising hydroxy-aryloxy terminal groups can also be used. These are known (see, for example, USP 3,419,634) or can be produced by methods known from the literature. The ester forming monomers may be utilized in the polycarbonate containing polymer preparation process. Exemplary ester forming monomers include dicarboxylic acid halides and hydroxycarboxylic acids, The aromatic dicarboxylic acid dihalides used for the production of the aromatic polyester carbonates may be the diacid dichlorides of isophthalic acid, terephthalic acid, diphenyl ether-4,4'-dicarboxylic acid and naphthalene-2,6-dicarboxylic acid. Mixtures of the diacid dichlorides of isophthalic acid and terephthalic in a ratio from about 1:20 to about 20:1 may be used. A carbonic acid halide, such as phosgene, may be used in conjunction as a difunctional acid derivative during the production of the polyester carbonates. The aromatic polyester carbonates may also contain incorporated hydroxycarboxylic acids. The polyester carbonates may be either linear or may be branched. Branching agents are disclosed hereinabove.

Apart from the aforementioned monophenols, exemplary chain terminators for the production of the aromatic polyester carbonates include chlorocarboxylic acid esters thereof, as well as the acid chlorides of aromatic monocarboxylic acids which may optionally be substituted by C-₁ - C₂₂ alkyl groups, or by halogen atoms, and also include aliphatic C₂ - C₂₂ monocarboxylic acid chlorides. The amount of chain terminator may be about 0.1 to about 10 mole percent in each case, with respect to the moles of diphenols in the case of phenolic chain terminators and with respect to the moles of dicarboxylic acid dichlorides in the case of monocarboxylic acid chloride chain terminators.

The polycarbonates or copolymers containing carbonate units may be derived from recycled materials. The polycarbonates or copolymers containing carbonate units may contain 100 percent recycled materials or may contain any desired mixture of recycled and virgin material. Virgin material as used herein refers to material that has not been previously used. The recycled material may be linear, branched or a mixture thereof. The recycled material may be branched. The recycled material may be in flake form. The recycled material may be recycled from bottles or other structures wherein the used structures are shredded into flake form. The recycled material can be formed into other structures such as pellets. The use of the recycled material in flake form is the most efficient way to utilize the material. The recycled polycarbonates or copolymers containing carbonate units may contain impurities such as polyesters, for instance 0.1 to 1.0 or 0.1 to 0.25 percent by weight based on the recycled polycarbonates or copolymers containing carbonate units.

The composition containing polycarbonates and/or copolymers containing carbonate units may contain a sufficient amount of branched polycarbonates and/or copolymers containing carbonate units to provide the desired properties as described in this application. The amount of the branched polycarbonates and/or copolymers containing carbonate units may be about 50 percent by weight or greater based on the weight of the composition containing polycarbonates and/or copolymers containing carbonate units, 60 percent by weight or greater or about 80 percent by weight or greater. The amount of the branched polycarbonates and/or copolymers containing carbonate units may be about 90 percent by weight or less based on the weight of the composition containing polycarbonates and/or copolymers containing carbonate units, 80 percent by weight or less or about 70 percent by weight or less.

The composition containing polycarbonates and/or copolymers containing carbonate units may contain a sufficient amount of linear polycarbonates and/or copolymers containing carbonate units to provide the desired properties as described in this application. The amount of the linear polycarbonates and/or copolymers containing carbonate units may be about 0 percent by weight or greater based on the weight of the composition containing polycarbonates and/or copolymers containing carbonate units, 5 percent by weight or greater or about 10 percent by weight or greater. The amount of the linear polycarbonates and/or copolymers containing carbonate units may be about 40 percent by weight or less based on the weight of the composition containing polycarbonates and/or copolymers containing carbonate units, 20 percent by weight or less or about 15 percent by weight or less.

The compositions containing polycarbonates or copolymers containing carbonate units used to form the polymeric layers contain crosslinked phosphazenes. Any one or more crosslinked phosphazene which enhances fire retardancy may be used. The phosphazenes may comprise more than one phosphazene unit. A phosphazene is an organic compound having a -P=N- structure. The phosphazene may be a linear structure containing one or more phosphazene units or a cyclic structure containing structure containing one or more phosphazene units. The phosphorous atoms on the phosphazene structure may have bonded thereto one or more hydrocarbyloxy structures. The hydrocarbyloxy groups may be alkoxy, aryloxy, alkyl substituted aryloxy, alkoxy substituted aryloxy or halo substituted aryloxy. The hydrocarbyloxy groups may be aryloxy or alkyl substituted aryloxy. The hydrocarbyloxy groups may be phenoxyoxy or alkyl substituted phenoxy. The alkyl groups may be C ₁₋₁₀ alkyl, C ₁₋₃ alkyl or methyl or ethyl. The cyclic phosphazene compounds may contain 1 or more phosphazene units, 3 or more phosphazene units. The cyclic phosphazene compounds may contain 25 or less phosphazene units, 10 or less phosphazene units or 5 or less phosphazene units. The linear phosphazene compounds may contain 1 or more phosphazene units, 3 or more phosphazene units, 5 or more phosphazene units or 6 or more phosphazene units. The linear phosphazene compounds may contain 10,000 or less phosphazene units, 1,000 or less phosphazene units, 100 or less phosphazene units, or 25 or less phosphazene units. Linear phosphazenes may correspond to the following formula 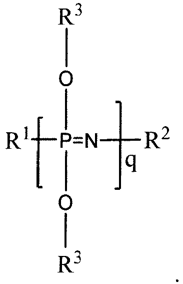 and cyclic phosphazenes may correspond to the formula 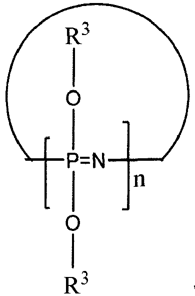 wherein:
q is an integer of from 3 to 10,000;
n is an integer of from 2 to 25;
R¹ is separately in each occurrence is a -N=P(OR³)₃ group or a -N=P(O)OR³ group;
R² is separately in each occurrence a -P(OR³)₄ or a -P(O)(OR³)₂ group; and,
R³ is separately in each occurrence alkyl, aryl, or alkyl halo or alkoxy substituted aryl group. q may be 5 or greater or 6 or greater, q may be 1000 or less, 100 or less or 25 or less. n may be 3 or greater, n may be 8 or less or 5 or less. R³ may be aryloxy or alkyl substituted aryloxy; phenoxyoxy or alkyl substituted phenoxy. The alkyl groups may be C ₁₋₁₀ alkyl, C ₁₋₃ alkyl or methyl or ethyl.

Exemplary cyclic phosphazenes include phenoxy cyclotriphosphazene, octaphenoxy cyclotetraphosphazene, and decaphenoxy cyclopentaphosphazene. Cyclic phosphazenes may be obtained by allowing ammonium chloride and phosphorus pentachloride to react at 120 to 130°C to obtain a mixture containing cyclic and straight chain chlorophosphazenes, extracting cyclic chlorophosphazenes such as hexachloro cyclotriphosphazene, octachloro cyclotetraphosphazene, and decachloro cyclopentaphosphazene, and then substituting it with a phenoxy group.

Exemplary linear phosphazenes include compounds obtained by subjecting hexachloro cyclotriphosphazene, obtained by the above-described method, to ring-opening polymerization at 220 to 250°C, and then substituting thus obtained chainlike dichlorophosphazene having a degree of polymerization of 3 to 10,000 (or as described before) with phenoxy groups.

The phosphazene compounds may be crosslinked by a bisphenol compound such as a 4,4'-diphenylene group, such as a 4,4'-sulfonyldiphenylene (bisphenol S residue), 2,2-(4,4'-diphenylene), isopropylidene group, 4,4'-oxydiphenylene group, and 4,4'-thiodiphenylene group. The phenylene group content of the crosslinked phenoxyphosphazene compound is generally 50 to 99.9 weight percent, or 70 to 90 weight percent. The crosslinked phenoxyphosphazene compound may be particularly preferable if it doesn't have any free hydroxyl groups in the molecule thereof.

The crosslinking group may correspond to the formula: 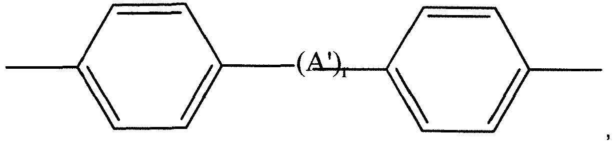 wherein A' is separately in each occurrence an alkylene group, SO₂, S, or O; and r is 0 or 1. The alkylene group may be methylene or -C(CH₃)₂-.

The crosslinked phosphazene compounds may be present in the compositions containing polycarbonates and/or copolymers containing carbonate units in a sufficient amount to improve the flame retardancy of the laminates prepared therefrom. The amount of the crosslinked phosphazene compounds may be such an amount such that the other properties of the laminates are not negatively impacted. The amount of the crosslinked phosphazene compounds may be about 8 percent by weight or greater based on the weight of the composition containing polycarbonates and/or copolymers containing carbonate units or 12 percent by weight or greater. The amount of the crosslinked phosphazene compounds may be about 24 percent by weight or less based on the weight of the composition containing polycarbonates and/or copolymers containing carbonate units, 21 percent by weight or less or about 18 percent by weight or less.

The compositions containing one or more polycarbonate or copolymers containing carbonate units and layers or sheets containing such compositions Z contain one or more salts of a perflourohydrocarbyl sulfur compounds or aromatic sulfur compounds. The one or more salts of a perflourohydrocarbyl sulfur compounds may be one or more salts of perflouroalkane sulfur compounds. Any salts of perflourohydrocarbyl sulfur compounds or aromatic sulfur compounds which improve the fire retardancy of laminated prepared from such sheets may be used. The one or more salts of a perflourohydrocarbyl sulfur compounds or aromatic sulfur compounds may include one or more an alkali metal salt, an alkaline earth metal salt or both. For example, the one or more salts of a perflourohydrocarbyl sulfur containing compounds or aromatic sulfur compounds may include a potassium salt, a sodium salt, a magnesium salt, a calcium salt, or any combination thereof. The one or more salts of perflourohydrocarbyl sulfur containing compounds or aromatic sulfur compounds may include or consist essentially of one or more potassium salts. The one or more salts of a perflourohydrocarbyl sulfur containing compounds or aromatic sulfur compounds are salts including one or more sulfur atoms. The one or more salts of perflourohydrocarbyl sulfur containing compounds or aromatic sulfur compounds may be a sulfonate. The sulfur-containing salt (e.g., the sulfonate) may includes one or more carbon containing groups. The number of carbon atoms in the sulfur-containing salt may be about 15 or less, about 13 or less, about 7 or less, or about 5 or less. The number of carbon atoms in the sulfur-containing salt may be 1 or more, 2 or more, 3 or more, or 4 or more. The carbon containing group may be acyclic or aromatic. The carbon containing group may includes one or more halogen atoms (e.g., a fluorine, a chlorine, a bromine, or any combination thereof). By way of example, the carbon containing group may include a fluoroalkane having one or more fluorine atoms (e.g., a perfluoroalkane, such as a perfluorobutane, a perfluorohexane, a perfluoropentane, a perfluoroheptane, a perfluoropropane, or a perfluorooctane). The sulfur-containing salt may include or consist substantially of one or more potassium perfluoroalkanesulfonates, such as potassium perfluorobutanesulfonate, sodium p-toluenesulfonate or potassium diphenylsulfone sulfonate. The perflourohydrocarbyl salts or aromatic sulfur compounds is present in an amount of 0.1 percent by weight or greater of the polycarbonate or carbonate containing polymer containing composition. The perflourohydrocarbyl metal salts or aromatic sulfur compounds is present in an amount of 2.0 percent by weight or less of the polycarbonate or carbonate containing polymer containing composition, preferably about 1.0 percent by weight or less or more preferably about 0.25 percent by weight or less.

The one or more polymers containing carbonate monomer units can comprise polycarbonates, co-polycarbonates or blends of polycarbonates and co-polycarbonates. The polycarbonates and/or co-polycarbonates may exhibit a mean weight average molecular weight sufficient to provide the desired properties to articles prepared from the polycarbonates and/or co-polycarbonates as described hereinbefore. The polycarbonates and/or co-polycarbonates may have a mean weight average molecular weights of about 8,000 or greater, about 15,000 or greater or about 30,000 or greater. The polycarbonates and/or co-polycarbonates may have a mean weight average molecular weight of about 200,000 or less, about 80,000 or less, or about 40,000 or less. Unless otherwise indicated, the references to polycarbonate and/or co-polycarbonate "molecular weight" herein refer to weight average molecular weights (Mw) determined by gel permeation chromatography (GPC) using laser scattering techniques with a bisphenol A polycarbonate standard and is given in units of grams per mole (g/mole). The melt flow rate (MFR) of the polycarbonate and/or co-polycarbonate may be sufficient to allow use of the blends to prepare desired articles therefrom. Preferably the melt flow rate is from about 3 to about 30 grams per 10 minutes (g/10 min) as determined at 300°C under a load of 1.2 kg. The test protocol is based on ASTM D1238.

The polycarbonates and/or co-polycarbonates may be used in pellet form, flake form, powder form or in a mixture thereof. Where used in powder form the particle size is selected for efficiently blending the materials. The particle size may be about 0.1 mm or greater or about 0.5 mm or greater. The particle size may be about 2.0 mm or less or about 1.5 mm or less.

The compositions containing polycarbonates or co-polymers containing carbonate units may contain one or more additional flame retardants commonly used in polycarbonate compositions. The flame retardant may be any flame retardant known for use in polycarbonate based compositions which provide flame retardant properties and which do not negatively impact the impact, heat resistance, flexural modulus, bending strength, haze and transparency of the composition. Flame retardants may be used in a sufficient amount to meet the flame retardancy requirements for the final use and in an amount that does not deleteriously impact the properties of articles prepared from the compositions. Exemplary flame retardants include phosphorous containing compounds, such as oligomeric phosphates, poly(block-phosphonato-esters), and/or a poly(block-phosphonato-carbonates) see USP 7,645,850. Exemplary oligomeric phosphates include bisphenol-A bis(diphenyl phosphate) (BAPP). Exemplary additional fire retardants include 1, 3-phenylenetetrakis (2, 6-dimethylphenyl)ester (Daihachi PX-200). The one or more additional flame retardants may be present in an amount of about 0.1 percent by weight or greater based on the weight of the composition containing polycarbonates and/or copolymers containing carbonate units, about 1 percent by weight or greater or about 5 percent by weight or greater. The one or more additional flame retardants may be present in an amount of about 30 percent by weight or less based on the weight of the composition containing polycarbonates and/or copolymers containing carbonate units, about 20 percent by weight or less, or about 10 percent by weight or less.

The composition containing polycarbonates and/or copolymers containing carbonate units may further comprise a fluorinated antidrip agent. Antidrip means to reduce the tendency of the composition to form burning drips in the event of a fire. Fluorinated polyolefins known in the art as antidrip agents may be used in the compositions of the invention. Exemplary fluorinated polyolefins are described in EP-A 0 640 655. They are marketed under the brand name 30N by DuPont.

The composition containing polycarbonates and/or copolymers containing carbonate units may further contain at least one or more additives commonly used in polycarbonate based compositions. For example, one such additive comprises one or more lubricants, for example mineral oil, epoxidized soybean oil, or the like; a nucleating agent; an anti-static agent; a stabilizer; a filler and/or a reinforcing material such as glass fibers, carbon fibers, metal fibers, metal coated fibers, thermoset fibers, glass beads, mica, silicates, quartz, talc, titanium dioxide, and/or wollastonite alone or in combinations; a dye; or a pigment. One such stabilizer is present to minimize ester-carbonate interchange. Such stabilizers are known in the art, for example see USP 5,922,816; 4,532,290; 4,401,804, and may comprise certain phosphorous containing compounds that include phosphoric acid, certain organic phosphorous compounds such as distearyl pentaerythritol diphosphate, mono or dihydrogen phosphate, or mono-, di-, or trihydrogen phosphate compounds, phosphate compounds, and certain inorganic phosphorous compounds such as monosodium phosphate and monopotassium phosphate, silyl phosphates, and silyl phosphate derivatives, alone or in combination. Such compositions may contain plasticizers commonly used in polycarbonate compositions useful in laminates.

The compositions disclosed may be produced by mixing the particular components in a known manner and melt-compounding and/or melt-extruding them at temperatures of from 200°C to 300°C in conventional units such as internal kneaders, extruders and twin-screw extruders. The individual components may be mixed in a known manner both in succession and simultaneously and both at approximately 23°C (room temperature) and at a higher temperature

The composition may contain a stabilizer salt. The stabilizer salt may be any compound that is a basic buffer which functions to prevent basic materials in the composition from causing the polycarbonates or copolymers containing carbonate units from depolymerizing. Exemplary classes of stabilizer salts include those disclosed in US 2013/0131241, in particular acids, acid salts and esters of acids derived from a phosphorous containing acid such as phosphoric acid, phosphorous acid, hypophosphorous acid, hypophosphoric acid, phosphinic acid, phosphonic acid, metaphosphoric acid, hexametaphosphoric acid, thiophosphoric acid, fluorophosphoric acid, difluorophosphoric acid, fluorophosphorous acid, difluorophosphorous acid, fluorohypophosphorous acid, fluorohypophosphoric acid or their combinations. A combination of a phosphorous containing acid and an ester of a phosphorous containing acid may be used used. Alternatively, acids, acid salts and esters of acids, such as, for example, sulphuric acid, sulphites, zinc phosphate, mono calcium phosphate, and the like, may be used. In particular embodiments, the acid stabilizer is phosphorous acid (H₃PO₃), phosphoric acid (H₃PO₄), zinc phosphate (Zn₃(PO₄)₂), zinc dihydrogen phosphate (ZnH₄P₂O₈), mono sodium phosphate (NaH₂PO₄), or sodium acid pyrophosphate (Na₂H₂P₂O₇), and monosodiumphosphate.
The stabilizer salt may be present in sufficient amount to prevent depolymerization of the polycarbonates or copolymers of polycarbonates. The stabilizer salt may be present in an amount of about 0.05 percent by weight or greater of the composition containing one or more polycarbonates and/or copolymers containing carbonate units. The stabilizer salt may be present in an amount of about 0.5 percent by weight or less of the composition containing one or more polycarbonates and/or copolymers containing carbonate units.

The composition containing one or more polycarbonates and/or copolymers containing carbonate units may contain antioxidants. The antioxidant may be present in sufficient amount to prevent oxidation of the compositions and structures formed. Exemplary antioxidant additives include, for example, organophosphites such as tris(nonyl phenyl)phosphite, tris(2,4-di-t-butylphenyl)phosphite (e.g., "IRGAFOS 168" or "I-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxy phenyl)propionate, pentaerythrityl-tetrakis[3-(3,5-di-tert-butyl-4-hydroxyphenyl) propionate or the like; amides of beta-(3,5-di-tert-butyl-4-hydroxyphenyl)-propionic acid or the like, or combinations comprising at least one of the foregoing antioxidants. Antioxidants may be used in amounts of 0.0001 to 1 weight percent of the composition containing one or more polycarbonates and/or copolymers containing carbonate units. The antioxidants may be present in an amount of about 200 ppm to 2000 ppm of the one or more polycarbonates and/or copolymers containing carbonate units.

The thickness of the fiber containing layers sheets may be sufficient for the intended use. The thickness of the fiber containing layers may be from 0.15 to 0.40 mm. The thickness of the formed laminate structures may be sufficient for the intended use. The thickness of the laminate structures may be 0.25 mm or greater. The thickness of the laminate structures may be 3.0 mm or less.

The sheets may be prepared using any known process for preparing polycarbonate based sheets, for example extrusion or co-extrusion, lamination, co-lamination and the like. The surface of the sheets can be textured using embossing rolls, and the like. The sheets may be further processed to make shaped articles by thermoforming and the like.

The layer of the composition one or more polycarbonates and/or copolymers containing carbonate units may be formed from a powder, flakes or pellets. Such layer may be formed by contacting the fiber structure with the powder, flakes or pellets of the composition and heating the structure with the powder, flakes or pellets in contact with the fiber structures above the melting point of the composition under conditions that the composition forms a layer bonded to the fiber containing structure. Exemplary temperatures for forming the layer on the fiber structure may be 150 °C or greater. Exemplary temperatures for forming the layer on the fiber structure may be 300 °C or less or 200 °C or less. The formation of the layer of the composition may in addition to heating may include the application of pressure to the structure in the direction transverse to the sheet faces. The pressure applied may be sufficient to bond the layer to the fiber containing sheets.

The laminate structures contain one or more fiber containing structures. The fiber containing structures may be used in sheet form. Fiber containing structures may be woven or non-woven structures. The fiber containing structures may comprise any type of fiber which imparts the desired properties. The fibers may be polymeric, metallic, carbon fibers (including carbon nano structures), glass, ceramic or the like. Polymeric fibers may comprise one or more polymers selected from aramids, polyesters, polyolefins, polyethylene amines, and the like. The fibers may be formed into substructures such as braided structures, tapes, and the like. The fiber structures may be used in the form of sheets. The sheets may have any thickness that provides the desired properties and affords the desired shape of the final structures formed. Structures having more than one fiber sheet may have more than one type of fiber sheet. The fiber sheets may be separately comprised of glass fibers, metallic fibers, carbon fibers, polymeric fibers, or ceramic fibers. The fiber sheets may be separately comprised of glass and carbon fibers.

The laminate structures may comprise one or more layers of fiber containing structures. Each layer may have a layer of the composition one or more polycarbonates and/or copolymers containing carbonate units applied to each face of the layers. Where there are two or more layers of fiber structures each layer of fiber structures may be disposed between two layers of the composition one or more polycarbonates and/or copolymers containing carbonate units. The outermost layers of the composition one or more polycarbonates and/or copolymers containing carbonate units may be in contact with only one layer of fiber structures. Inner layers of the composition one or more polycarbonates and/or copolymers containing carbonate units may be in contact with two layers of fiber structures. The laminates may contain 1 or more, 2 or more or 3 or more fiber layers. The laminates may contain 10 or less, 5 or less or 3 or less fiber layers. The number of layers of the composition one or more polycarbonates and/or copolymers containing carbonate units may be one more than the number of fiber layers. The laminates may have layers of the composition containing one or more polycarbonates and/or copolymers containing carbonate units on both outside surfaces of the structure. The laminates may contain 2 or more, 3 or more or 4 or more layers of the composition containing one or more polycarbonates and/or copolymers containing carbonate units. The laminates may contain 11 or less, 6 or less or 4 or less layers of the composition containing one or more polycarbonates and/or copolymers containing carbonate units.

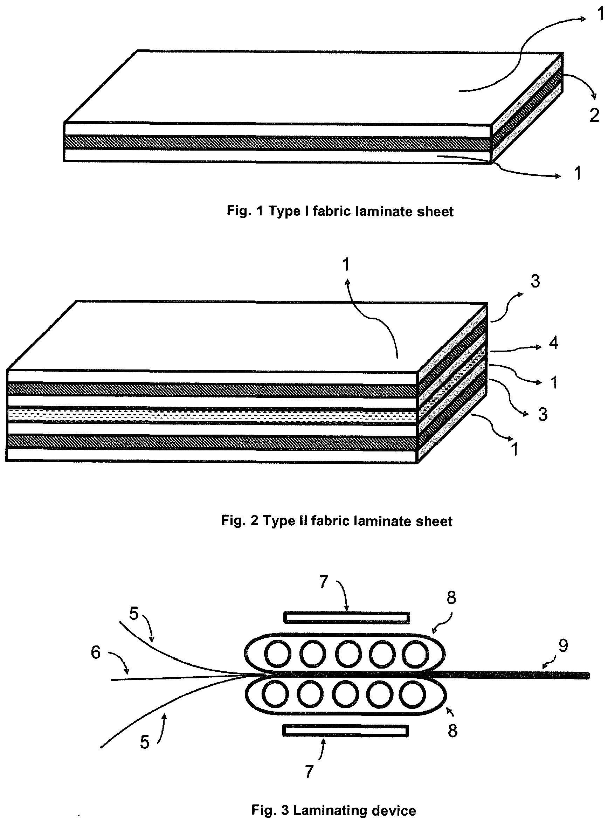

Figure 1 shows a laminate sheet of two layers of the composition containing one or more polycarbonates and/or copolymers containing carbonate units 1 and a layer of a fiber based sheet, 2, for example carbon or glass fiber based sheets. Figure 2 shows a structure with two different fiber layers. The structure contains layers of the composition containing one or more polycarbonates and/or copolymers containing carbonate units 1, carbon fiber fabric 3 and glass fiber fabric 4.

The laminates may be formed in a laminating device by feeding sheets of the composition containing one or more polycarbonates and/or copolymers containing carbonate units and sheets comprising fiber structures to the laminating device. The top and bottom layer may be layers of the composition containing one or more polycarbonates and/or copolymers containing carbonate units. The layers may be fed at temperatures at which the composition containing one or more polycarbonates and/or copolymers containing carbonate units melts. The temperature may be about 150 °C or greater or about 200 °C or greater. The temperature may be about 300°C or less, about 280 °C or less or about 200 °C or less. Pressure may be applied during lamination. The pressure may be any pressure that enhances forming of the laminates. Figure 3 shows the laminating process. Shown are sheets of fiber 6 and layers of the composition containing one or more polycarbonates and/or copolymers containing carbonate units 5 being fed between two caterpillar pressing bands 8 between two heaters 7 to form a fused composite laminate band 9.

Wherein a powder, flake or pellet form of the composition containing one or more polycarbonates and/or copolymers containing carbonate units is used the fiber layers are coated with the composition before feeding to the structures to the laminating structure. The composition containing one or more polycarbonates and/or copolymers containing carbonate units can be formed into fibers and metallic, glass, carbon, ceramic or other polymeric fibers and the fibers of composition containing one or more polycarbonates and/or copolymers containing carbonate units can be mixed to form a non-woven structure. The non-woven layers may be can be stacked with other layers for lamination. The laminate structure can alternatively be unidirectional UD tape, formed from the composition containing one or more polycarbonates and/or copolymers containing carbonate units. For impregnation of with the composition containing one or more polycarbonates and/or copolymers containing carbonate units, a film is made by melting the polymer in an extruder and metering the film thickness on the impregnation roller. The spread fibers are impregnated up to a certain level on the impregnation roller and post impregnation takes place before final consolidation and being cooled. Then, the final laminate can made by stacking UD tape in two directions, and using a double-belt press process to fuse the UD layers.

The UL-94 vertical test (20 mm vertical burn test) in the UL standards is a measuring method used for an index of flame retardancy in an unexpanded resin. The purpose of the test is to determine the resistance of plastic materials used for parts in devices and appliances to flame and glow propagation. UL 94 is used to measure burning rate and characteristics based on standard samples. Sample size is 12.7mm by 127mm, with the thickness varying. Thickness must be reported when a rating is given. The relevant ratings are: V-2, V-1 and V-0. "V-0" is the most common rating seen parts where increases in protection from combustion is required. V-0 carries the following requirements:
1. None of the five samples can have flaming combustion for more than 10 seconds after each of two 10 second flame applications.
2. The total flaming combustion time for the ten 10 second flame applications (5 samples, 2 applications each) of more than 50 seconds.
3. None of the five samples may burn with flaming or glowing combustion up to the holding clamp.
4. None of the five samples may drip flaming particles which ignite dry absorbent cotton located 305mm below the sample.
5. None of the five samples may have glowing combustion which persists for more than 30 seconds after the second removal of the flame.
The other ratings have a similar format. The most significant difference in the ratings are the times the samples are allowed to support flaming or glowing combustion. The flame application time is the same. Here is a short summary of the V-O, V-1 and V-2 required results: V-0 burning stops within 10 seconds after two applications of ten seconds each of a flame to a test bar and no flaming drips are allowed; V-1 burning stops within 60 seconds after two applications of ten seconds each of a flame to a test bar, and no flaming drips are allowed; and V-2 burning stops within 60 seconds after two applications of ten seconds each of a flame to a test bar and flaming drips are allowed.

The test procedure is summarized here. Test specimens having a specific size are perpendicularly attached to a clamp, flame contact is performed for 10 seconds by 20 mm flame. Each of five specimens is clamped 300 mm above a layer of dry cotton. A calibrated flame is applied to the bottom edge of the vertically supported test bar for 10 seconds and any after flame time (t1) is noted. When after flaming ceases the flame is reapplied for an additional 10 seconds and after flame time (t2) and afterglow time (t3) is noted. If one specimen fails, a second set of five can be tested. More details can be acquired by contacting UL or obtaining a copy of this and other UL Standards by visiting the UL's Standards Department web site, at http://ulstandardsinfonet.ul.com. The Table below, defines the specific criteria for V-0, V-1 and V-2 ratings.

**TABLE**

| Criteria Conditions | V-0 | V-1 | V-2 |
|---|---|---|---|
| Afterflame time for each | ≦ 10 s | ≦30 s | ≦30 s |
| individual specimen T1 or T2 | | | |
| Total afterflame time for any condition set (T1 plus T2 for the 5 specimens) | ≦50 s | ≦250 s | ≦250 s |
| Afterflame plus afterglow time for each individual specimen after the second flame application (T2 + T3) | ≦30 s | ≦60 s | ≦60 s |
| Afterflame or afterglow of any specimen up to the holding clamp | No | No | No |
| Cotton indicator ignited by flaming particles or drops | No | No | Yes |

### ILLUSTRATIVE EMBODIMENTS

The following examples are provided to illustrate the invention, but are not intended to limit the scope thereof. All parts and percentages are by weight unless otherwise indicated.

The following materials are used in carrying out experiments.
A Calibre 600-3 branched Bisphenol A polycarbonate
B Mitsubishi H-2000F Linear polycarbonate powder
C1 bisphenol A bis(diphenyl phosphate) 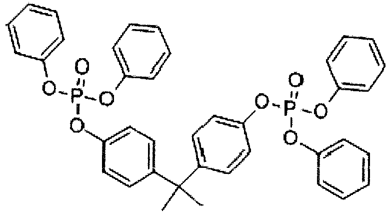
C2 Crosslinked Hexa-phenoxy-cyclo-phosphazene 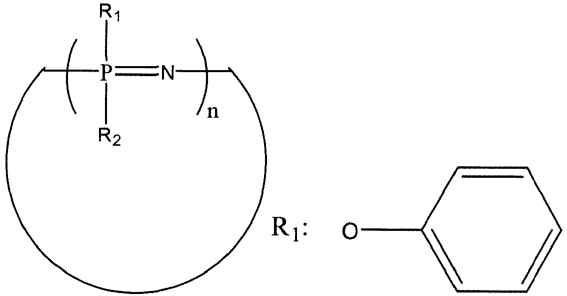 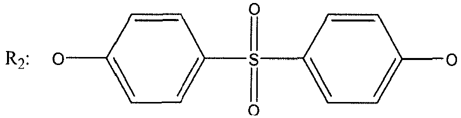 K=3~5, R= phenoxy.

An example of the crosslinking structure is 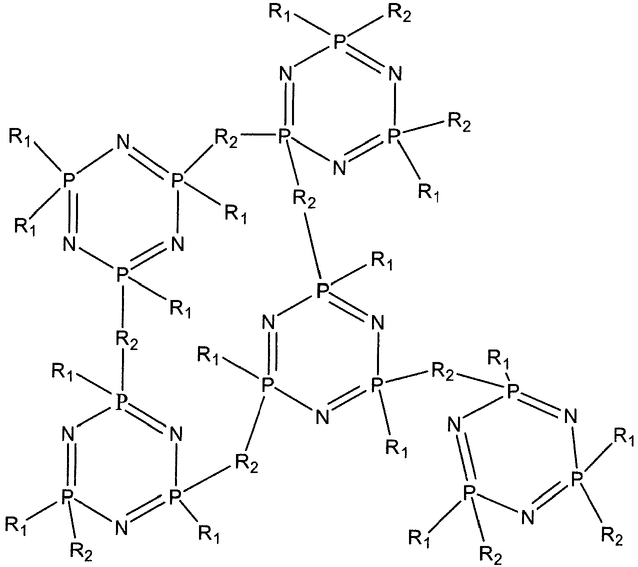
C-3: phosphonate homopolymer such as NOFIA FRX HM-1100 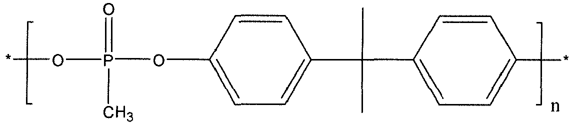
D potassium perflourobutane sulfonate
E: 2-(2H-benzotriazol-2-yl)-4,6-bis(1-methyl-1-phenylethyl)phenol from BASF Tinuvin 234
F: Blend of Tris(2,4-di-tert-butylphenyl) phosphite and Octadecyl 3-(3,5-di-tert-butyl-4-hydroxyphenyl)propionate from BASF Irganox B-900
G: PentaErythritol Tetrastearate.

The listed materials are compounded and granulated in a twin screw extruder at a speed of 300 rpm at a throughput of 20kg/h at 260 °C. Thin sheets with a 0.2 mm thickness of the composition referred are prepared by a T-die adapted single-screw extruder at 260°C. Pre-woven glass structured fabric and the polycarbonate sheets are stacked in the manner disclosed in Fig.1 or Fig.2. Then the device shown in Fig.3 pulls the stacked sheets into a continuous heating and pressing chamber. After 10 minutes of pressing time under 280°C, the fused laminate sheets from the outlet of the device are air cooled and cut to desired size. The laminate sheet is 0.75mm thick and contains 45 weight percent fabric.

Flammability test on laminate sheets are performed in accordance with UL94 V protocol. The sheets are first cut into a dimension of 125 mm length x 13 mm width and a thickness of 0.75 mm. The amounts of materials and the results are compiled in Table 1.

**Table 1. 0.75mm laminate sheet containing 45 wt% Glass fabric**

| | Comparativ e Examples | | Example | | | | | | | | |
|---|---|---|---|---|---|---|---|---|---|---|---|
| Ingredient | 1 | 2 | 1 | 2 | 3 | 4 | 5 | 6 | 7 | 8 | 9 |
| A | 89.6 | 71.6 | 74.6 | 69.6 | 64.6 | 81.35 | 77.4 | 73.4 5 | 69.5 | 74.5 | 71.5 |
| B | 10 | 10 | 10 | 12 | 14 | 8 | 10 | 12 | 12 | 10 | 10 |
| C-1 | | 18 | | | | | | | | | |
| C-2 | | | 15 | 18 | 21 | 10 | 12 | 14 | 18 | | |
| C-3 | | | | | | | | | | 15 | 18 |
| D | 0.15 | | | | | 0.25 | 0.2 | 0.15 | 0.1 | 0.1 | 0.1 |
| E | 0.2 | 0.2 | 0.2 | 0.2 | 0.2 | 0.2 | 0.2 | 0.2 | 0.2 | 0.2 | 0.2 |
| F | 0.1 | 0.1 | 0.1 | 0.1 | 0.1 | 0.1 | 0.1 | 0.1 | 0.1 | 0.1 | 0.1 |
| G | 0.1 | 0.1 | 0.1 | 0.1 | 0.1 | 0.1 | 0.1 | 0.1 | 0.1 | 0.1 | 0.1 |
| UL94 Ratin g | No ratin g | V-1 | V-0 | V-0 | V-0 | | | | V-0 | | |
| Σ (T1+ T2) | >150 | 100 | 29 | 30 | 31 | | | | 25 | | |

| | | | | | | | | | | | |
|---|---|---|---|---|---|---|---|---|---|---|---|
| Examples 1 to 3 and 7 (45 weight percent of glass fabric) are tested for flexural modulus according to test procedure ISO 178 and Bending Strength according to test procedure ISO 178. The results are compiled in Table 2. | | | | | | | | | | | |

| Example | Fire retardants | Flexural Modulus (GPa) | Bending Strength (MPa) |
|---|---|---|---|
| | | | |
| 1 | 15% Phosphazene | 21 | 587 |
| 2 | 18% Phosphazene | 21 | 584 |
| 3 | 21% Phosphazene | 23 | 603 |
| 7 | 18% Phosphazene + potassium perfluoro butane sulfonate | 22 | 597 |

The compositions of Examples 1 to 3 and 7 with 45 weight percent of carbon fabric are tested for flexural modulus and Bending Strength. The results are compiled in Table 3.

| Example | Fire retardants | Flexural Modulus (GPa) | Bending Strength (MPa) |
|---|---|---|---|
| | | | |
| 1 | 15% Phosphazene | 43 | 781 |
| 2 | 18% Phosphazene | 43 | 757 |
| 3 | 21% Phosphazene | 45 | 860 |
| 7 | 18% Phosphazene + potassium perfluoro butane sulfonate | 43 | 781 |

Parts by weight as used herein refers to 100 parts by weight of the composition specifically referred to. Any numerical values recited in the above application include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value, and the highest value enumerated are to be considered to be expressly stated in this application in a similar manner. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

## Claims

1. A laminate composition comprising one or more layers of a fiber structure and two or more layers of a polymeric composition wherein each layer of the fiber structure is disposed between two layers of the polymeric composition wherein the polymeric composition contains:
a) from 50 to 90 percent by weight of one or more branched polycarbonates or co-polymers containing carbonate units;
b) from 0 to 40 percent by weight of one or more linear polycarbonate or co-polymers containing carbonate units;
c) from 8 to 24 percent by weight of one or more crosslinked phosphazenes; and
d) from 0.1 to 2.0 percent by weight of one or more salts of a perflourohydrocarbyl sulfur compound or aromatic sulfur compound
wherein all weights are based on the polymeric film composition; and wherein the laminate composition exhibits a UL 94 rating of V-0 with a Σ (T1+T2) of 50 or less.

2. A laminate composition according to Claim 1 wherein the polymeric composition contains one or more linear polycarbonates or co-polymers containing carbonate units.

3. A laminate composition according to Claim 1 or 2 wherein the polymeric layer composition contains one or more recycled branched polycarbonates or co-polymers containing carbonate units or one or more recycled linear polycarbonates or co-polymers containing carbonate units.

4. A laminate composition according to any one of the preceding Claims wherein the one or more salts of a perflourohydrocarbyl sulfur compound or aromatic sulfur compounds are present in an amount of up to about 1 percent by weight based on the polymeric film composition.

5. A laminate composition according to any one of the preceding claims wherein the one or more phosphazenes is one or more cyclic phosphazenes.

6. A laminate composition according to any one of the preceding claims wherein the one or more crosslinked phospahzenes are crosslinked by the residue of a bisphenol compound.

7. A laminate composition according to any one of the preceding claims wherein the fiber structure is woven or non-woven.

8. A laminate composition according to any one of the preceding claims wherein the fiber structure comprises fibers containing one or more of glass, polymers, metal, ceramic and carbon .

9. A laminate composition according to any one of the preceding claims wherein the fiber structure comprises woven glass and/or carbon fiber structures.

10. A laminate composition according to any one of the preceding claims wherein the polymeric composition contains one or more non-halogenated flame retardants.

11. A laminate composition according to any one of the preceding claims wherein the polymeric composition contains one or more antioxidants.

12. A laminate composition according to any one of the preceding claims wherein the polymeric composition contains one or more UV Absorbers.

13. A laminate composition according to any one of the preceding claims wherein the laminate comprises from about 40 to about 60 percent by weight of the polymeric composition and about 40 to about 60 percent by weight of the fiber structure based on the weight of the laminate composition.

14. A laminate composition wherein the fiber structures are in the form of fiber containing layer sheets having a thickness of 0.15 to 0.40 mm and the laminate structures have a thickness of 0.25 to 3.0 mm.

## Patentansprüche

1. Laminatzusammensetzung, umfassend eine oder mehrere Schichten einer Faserstruktur und zwei oder mehrere Schichten einer Polymerzusammensetzung, wobei jede Schicht der Faserstruktur zwischen zwei Schichten der Polymerzusammensetzung angeordnet ist, wobei die Polymerzusammensetzung enthält:
a) 50 bis 90 Gewichtsprozent eines oder mehrerer verzweigter Polycarbonate oder Copolymere, welche Carbonateinheiten enthalten;
b) 0 bis 40 Gewichtsprozent eines oder mehrerer linearer Polycarbonate oder Copolymere, welche Carbonateinheiten enthalten;
c) von 8 bis 24 Gewichtsprozent eines oder mehrerer vernetzter Phosphazene; und
d) 0,1 bis 2,0 Gewichtsprozent eines oder mehrerer Salze einer Perfluorhydrocarbyl-Schwefelverbindung oder einer aromatischen Schwefelverbindung,
wobei alle Gewichte auf die Polymerschichtzusammensetzung bezogen sind; und wobei die Laminatzusammensetzung eine UL 94-Bewertung von V-0 mit einem (T1+T2) von 50 oder weniger aufweist.

2. Laminatzusammensetzung gemäß Anspruch 1, wobei die Polymerzusammensetzung ein oder mehrere lineare Polycarbonate oder Copolymere enthält, welche Carbonateinheiten enthalten.

3. Laminatzusammensetzung gemäß Anspruch 1 oder 2, wobei die Polymerschichtzusammensetzung ein oder mehrere recycelte verzweigte Polycarbonate oder Copolymere, welche Carbonateinheiten enthalten, oder ein oder mehrere recycelte lineare Polycarbonate oder Copolymere, welche Carbonateinheiten enthalten, enthält.

4. Laminatzusammensetzung gemäß einem der vorhergehenden Ansprüche, wobei das eine oder die mehreren Salze einer Perfluorhydrocarbyl-Schwefelverbindung oder aromatischen Schwefelverbindungen in einer Menge von bis zu etwa 1 Gewichtsprozent, bezogen auf die Polymerschichtzusammensetzung, vorhanden sind.

5. Laminatzusammensetzung gemäß einem der vorangehenden Ansprüche, wobei das eine oder die mehreren Phosphazene ein oder mehrere zyklische Phosphazene sind.

6. Laminatzusammensetzung gemäß einem der vorhergehenden Ansprüche, wobei das eine oder die mehreren vernetzten Phosphazene durch den Rest einer Bisphenolverbindung vernetzt sind.

7. Laminatzusammensetzung gemäß einem der vorangehenden Ansprüche, wobei die Faserstruktur gewebt oder nicht gewebt ist.

8. Laminatzusammensetzung gemäß einem der vorangegangenen Ansprüche, wobei die Faserstruktur Fasern umfasst, welche eine oder mehrere aus Glas, Polymeren, Metall, Keramik und Kohlenstoff enthalten.

9. Laminatzusammensetzung gemäß einem der vorhergehenden Ansprüche, wobei die Faserstruktur gewebte Glas- und/oder Kohlenstofffaserstrukturen umfasst.

10. Laminatzusammensetzung gemäß einem der vorhergehenden Ansprüche, wobei die Polymerzusammensetzung ein oder mehrere nichthalogenierte Flammschutzmittel enthält.

11. Laminatzusammensetzung gemäß einem der vorangehenden Ansprüche, wobei die Polymerzusammensetzung ein oder mehrere Antioxidantien enthält.

12. Laminatzusammensetzung gemäß einem der vorangehenden Ansprüche, wobei die Polymerzusammensetzung ein oder mehrere UV-Absorber enthält.

13. Laminatzusammensetzung gemäß einem der vorhergehenden Ansprüche, wobei das Laminat etwa 40 bis etwa 60 Gewichtsprozent der Polymerzusammensetzung und etwa 40 bis etwa 60 Gewichtsprozent der Faserstruktur, bezogen auf das Gewicht der Laminatzusammensetzung, umfasst.

14. Laminatzusammensetzung, wobei die Faserstrukturen in Form von faserhaltigen Schichtblättern mit einer Dicke von 0,15 bis 0,40 mm vorliegen und die Laminatstrukturen eine Dicke von 0,25 bis 3,0 mm aufweisen.

## Revendications

1. Composition de stratifié comprenant une ou plusieurs couches d'une structure de fibres et deux couches ou plus d'une composition polymère dans laquelle chaque couche de la structure de fibres est disposée entre deux couches de la composition polymère dans laquelle la composition polymère contient :
a) de 50 à 90 pour cent en poids d'un ou plusieurs polycarbonates ou copolymères contenant des unités de carbonate ramifiés ;
b) de 0 à 40 pour cent en poids d'un ou plusieurs polycarbonates ou copolymères contenant des unités de carbonate linéaires ;
c) de 8 à 24 pour cent en poids d'un ou plusieurs phosphazènes réticulés ; et
d) de 0,1 à 2,0 pour cent en poids d'un ou plusieurs sels d'un composé de soufre perfluorohydrocarbyle ou d'un composé de soufre aromatique
dans laquelle tous les poids sont fondés sur la composition de film polymère ; et dans laquelle la composition de stratifié présente un indice UL 94 de V-0 à Σ (T1 + T2) de 50 ou moins.

2. Composition de stratifié selon la revendication 1 dans laquelle la composition polymère contient un ou plusieurs polycarbonates ou copolymères contenant des unités de carbonate linéaires.

3. Composition de stratifié selon la revendication 1 ou 2 dans laquelle la composition de couche polymère contient un ou plusieurs polycarbonates ou copolymères contenant des unités de carbonate ramifiés recyclés ou un ou plusieurs polycarbonates ou copolymères contenant des unités de carbonate linéaires recyclés.

4. Composition de stratifié selon l'une quelconque des revendications précédentes dans laquelle les un ou plusieurs sels d'un composé de soufre perfluorohydrocarbyle ou d'un composé de soufre aromatique sont présents dans une quantité allant jusqu'à environ 1 pour cent en poids sur la base de la composition de film polymère.

5. Composition de stratifié selon l'une quelconque des revendications précédentes dans laquelle les un ou plusieurs phosphazènes sont un ou plusieurs phosphazènes cycliques.

6. Composition de stratifié selon l'une quelconque des revendications précédentes dans laquelle les un ou plusieurs phosphazènes réticulés sont réticulés par le résidu d'un composé de bisphénol.

7. Composition de stratifié selon l'une quelconque des revendications précédentes dans laquelle la structure de fibres est tissée ou non-tissée.

8. Composition de stratifié selon l'une quelconque des revendications précédentes dans laquelle la structure de fibres comprend des fibres contenant un ou plusieurs parmi du verre, des polymères, du métal, de la céramique et du carbone.

9. Composition de stratifié selon l'une quelconque des revendications précédentes dans laquelle la structure de fibres comprend des structures de fibres de verre et/ou de carbone tissées.

10. Composition de stratifié selon l'une quelconque des revendications précédentes dans laquelle la composition polymère contient un ou plusieurs retardateurs de flamme non-halogénés.

11. Composition de stratifié selon l'une quelconque des revendications précédentes dans laquelle la composition polymère contient un ou plusieurs antioxydants.

12. Composition de stratifié selon l'une quelconque des revendications précédentes dans laquelle la composition polymère contient un ou plusieurs absorbeurs d'UV.

13. Composition de stratifié selon l'une quelconque des revendications précédentes dans laquelle le stratifié comprend d'environ 40 à environ 60 pour cent en poids de la composition polymère et d'environ 40 à environ 60 pour cent en poids de la structure de fibres sur la base du poids de la composition de stratifié.

14. Composition de stratifié dans laquelle les structures de fibres se présentent sous la forme de feuilles de couche contenant des fibres présentant une épaisseur de 0,15 à 0,40 mm et les structures de stratifié présentent une épaisseur de 0,25 à 3,0 mm.
